# EUROPEAN PATENT SPECIFICATION

(11) **EP 4 735 276 B1**
(45) Date of publication and mention of the grant of the patent: **09.12.2026**
(21) Application number: 24748430.6
(22) Date of filing: 17.07.2024
(51) Int. Cl.: B60C 29/02, F16K 15/20, B60C 29/06

(54) **INFLATION VALVE COMPRISING A BALL VALVE FOR TUBELESS TYRE**
AUFPUMPVENTIL MIT EINEM KUGELVENTIL FÜR EINEN SCHLAUCHLOSEN REIFEN
VALVE DE GONFLAGE COMPRENANT UNE VALVE À BILLE POUR PNEU SANS CHAMBRE

(30) Priority: 18.08.2023 GB 202312626
(43) Date of publication of application: 06.05.2026
(60) Divisional application: 26216641.6
(73) Proprietor: Trimnell, Alex, Poole, Dorset BH14 8TA (GB)
(72) Inventor: Trimnell, Alex, Poole, Dorset BH14 8TA (GB)
(74) Representative: Murgitroyd & Company
(86) International application number: PCT/GB2024/051863
(87) International publication number: WO 2025/040869

(56) References cited:
- JP-U- S53 138 303
- US-A- 5 029 604
- US-A- 5 479 975
- US-A1- 20230 243 435

## Description

This invention relates to an inflation valve comprising a ball valve for use with a tubeless tyre.

### Background

Tyres for motor-driven (e.g. cars, motorcycles, scooters) or self-propelled vehicles (e.g. bicycles) generally comprise an annular component that surrounds a rim on the wheel of the vehicle. The annular component commonly comprises an outer body usually formed from rubber and which contacts the surface along which the vehicle is to travel. In pneumatic tyres, this outer body encloses an inflatable inner tube which surrounds and is attached to the rim. The inner tube thereby provides cushioning when the vehicle is travelling along uneven surfaces, improving the ride quality for the rider/driver/passenger.

A problem with pneumatic tyres is that the inner tube can often become damaged, particularly when they are used on uneven surfaces, resulting in inner tube deflating (i.e. a flat tyre).

One attempt at addressing this drawback with pneumatic tyres has been the development of tubeless tyres. Tubeless tyres have the same general structure as a pneumatic tyre, but without the inner tube. Instead, the outer body of the tyre is manufactured or treated such that it creates a substantially airtight seal between the outer body and the rim of the wheel. For example, a sealant may be applied to the inner surface of the inside of the tyre.

A leading valve type used with tubeless tyre setups is known as Presta valve. However, problems can be encountered during inflation of the tubeless tyre when using such Presta valves. These problems are set out in more detail below.

Inflation valves comprise a section known as the valve core, which is the part that controls the flow of air through the valve. When inflating a tubeless tyre, the valve core needs to allow sufficient airflow for efficient inflation. However, there are several factors that can restrict airflow through the valve, which can make it difficult to inflate the tyre properly. These include:
(a) Valve core design: Some tubeless Presta valves have a narrow or restrictive valve core design. This can impede the airflow through the valve, resulting in longer inflation times, or even an inability to fully inflate the tyre. This can lead to the user having to remove the valve core so that they can correctly inflate the tyre.
(b) Valve length: Inflation valves for tubeless tyres come in a variety of lengths in order to accommodate different tyre rim depths. For deep-section tyre rims, a longer valve may be required. However, such longer valves may have a higher chance of restricting airflow due to their extended length. This can again lead to slower or inadequate tyre inflation.
(c) Valve stem design: The overall design of the valve stem (i.e. the part of the valve into which the valve core is fitted) can also impact airflow. Some valve stems have narrower profiles or additional internal obstructions which can create resistance and reduce the air volume flowing through the valve during inflation.

As discussed above, a sealant can be applied to the inside of a tubeless tyre in order to provide an improved seal between the outer body and the rim of the wheel. Such sealants are usually inserted into the tubeless tyre through the inflation valve. In addition to problems of restricted airflow, tubeless Presta valves can also hinder the flow of this sealant through the valve. This can be due to either:
(a) Valve core clogging: Over time, sealant can accumulate and dry in and around the valve core, causing it to stick or become clogged. This then reduces the flow of sealant through the valve, and can result in inadequate sealing or difficulty in replenishing sealant levels.
(b) Sealant build up: In some cases, the sealant can build up inside the valve, forming a barrier that restricts the flow of sealant through the valve. This build up can occur either due to the viscosity of the sealant, or its interaction with air and moisture. Reduced sealant flow can compromise the tyre's ability to self-seal punctures effectively.

To overcome these issues, it is often recommended to users that they should remove the valve core when inflating a tubeless tyre or adding sealant to the tyre. Removal of the valve core improves airflow, as well as allowing the sealant to flow freely through the valve. This helps to provide more efficient inflation and better sealant distribution within the tyre. However, it would be desirable if these objects could be achieved without the need to partially dismantle the inflation valve by removing the valve core.

US 2023/243435 A1 describes an inflation valve for a tubeless tyre, the valve comprising a ball. US 5 029 604 A relates to a safety core for a tyre valve comprising a ball.

Improvements in inflation valves for tubeless tyres have been sought.

### Statement of invention

This invention relates to an inflation valve for use with a tubeless tyre, the inflation valve comprising a ball valve, the ball valve comprising a housing within which is provided a ball, characterised in that the ball is formed with a through-hole, the ball being rotatable between an open position in which air and/or sealant is allowed to flow through the through-hole, and a closed position in which air and/or sealant is substantially prevented from flowing through the through-hole. An advantage of this system is that it can provide a larger, unrestricted pathway for enhanced airflow during inflation of a tubeless tyre. This is especially important for a tubeless set up where a large volume of air is necessary to create enough pressure to force the tyre bead to pop into place on the rim. This is particularly important in the initial seating of the tyre phase, when trying to get an airtight seal between the tire and the rim where maximum airflow is required to do so.

In particular, the inflation valve may have first and second ends, the first end comprising a valve head comprising the ball valve.

In the context of the invention, the term "upper" is used to refer to the part of the inflation valve that, in use, is closest to the centre of the wheel to which it is attached. Similarly, the term "lower" is used to refer to the part of the inflation valve that, in use, is closest to the surface-contacting part of the tyre (and furthest from the rim or centre of the wheel).

In particular, the valve head may comprise at its first end a valve upper which is adapted for connection to an inflation device. More particularly, the inflation device may be a motorised or manual pump. In particular, the inflation valve may comprise a conduit which provides fluid connection between the first and second ends of the inflation valve.

In particular, the second end of the inflation valve may comprise a valve base. More particularly, the valve head and the valve base may be connected by a valve stem.

In some embodiments, the inflation valve may be formed as a single part. In other embodiments, the inflation valve may comprise two parts which are adapted for connection to one another, (i) the valve head, and (ii) the valve stem and valve base.

More particularly, the valve stem may have a substantially circular, triangular, rectangular, square, oval, diamond, pentagonal, hexagonal or octagonal cross-section, even more particularly a substantially circular cross-section.

In particular, the valve base may have a diameter which is larger than that of the valve stem. More particularly, the valve base have a substantially circular triangular, rectangular, pentagonal, hexagonal or octagonal cross-section. More particularly, the valve base may have a substantially circular or hexagonal cross-section. In particular, the valve base may comprise an outer end face and at least one side wall which extends inwardly from the outer end face. More particularly, the valve base may have a substantially circular cross-section and may comprise one or more apertures which connect to a conduit through the inflation valve. More particularly, each aperture may connect to the conduit in order to provide fluid communication between the first and second ends of the inflation valve. Alternatively, the valve base may have a substantially hexagonal cross-section and may comprise six side walls, one or more of which comprise an aperture which connects to the conduit through the inflation valve. More particularly, each wall may comprise an aperture which connects to the conduit which provides fluid communication between the first and second ends of the inflation valve.

More particularly, the valve stem may have a substantially circular cross-section. In particular, the valve stem may comprise an external surface on which is formed a screw thread. More particularly, a locking nut may be provided on the screw thread. The locking nut can assist in attaching the inflation valve to a wheel rim.

In some embodiments, the valve head and valve stem may be in the form of a Presta valve. That is, the valve stem may have an outer diameter of about 6 mm. In an alternative embodiment, the valve stem may be in the form of a Presta valve, and the valve head may be in the form of a Schrader valve. That is, the valve head may be connectable to a Schrader pump. In a further embodiment, the valve head and valve stem may be in the form of a Schrader valve. That is, the valve stem may have an outer diameter of about 8 mm and the valve head may be connectable to a Schrader pump.

In particular, the inflation valve may be for a vehicle tyre. In particular, the vehicle may be a bicycle, electric bicycle, motorcycle, electric motorcycle, scooter, car, lorry, truck or plane. More particularly, the bicycle may be a mountain bike.

### Brief description of the drawings

This invention will be further described by reference to the following Figures which are not intended to limit the scope of the invention claimed, in which:
**Figure 1** shows a perspective view of an inflation valve according to a first embodiment of the invention, for use with a tubeless tyre, the valve comprising a Presta valve head and valve stem,
**Figure 2** shows an exploded perspective view of the inflation valve of Figure 1,
**Figure 3** shows a side-on view of the inflation valve of Figure 1,
**Figure 4** shows a front-on view of the inflation valve of Figure 1,
**Figure 5** shows a cross-sectional view of the inflation valve through line A-A in Figure 4,
**Figure 6** shows a cross-sectional view of the ball valve and valve upper of the inflation valve of Figure 1,
**Figure 7** shows an exploded perspective view of the ball valve and valve upper of the inflation valve of Figure 1,
**Figure 8** shows a front-on view of an inflation valve according to a second embodiment of the invention, for use with a tubeless tyre, the valve comprising a Schrader valve head and a Presta valve stem,
**Figure 9** shows a rear cross-sectional view of the inflation valve of Figure 8, without the valve cap,
**Figure 10** shows front-on view of an inflation valve according to a third embodiment of the invention, for use with a tubeless tyre, the valve comprising a Schrader valve head and valve stem, and
**Figure 11** shows a rear cross-sectional view of the inflation valve of Figure 10, without the valve cap.

### Detailed description

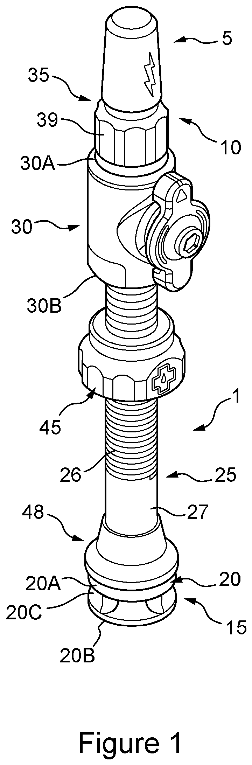

Figures 1-5 show an inflation valve 1 according to a first embodiment of the invention. For ease of reference, not all component parts are labelled in all of the Figures. The valve 1 comprises a first end 5 at which is formed valve head 10, and a second end 15 at which is formed valve base 20. Valve head 10 and valve base 20 are connected by valve stem 25. Valve stem 25 is cylindrical and has screw thread 26 formed on its outer surface 27. In this embodiment, the valve head 10, in particular the valve upper 65 (see below), and valve stem 25 are shaped as a Presta valve (i.e. they have an outer diameter of ~6 mm).

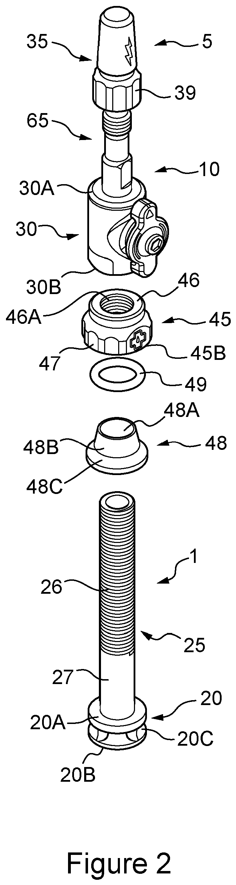

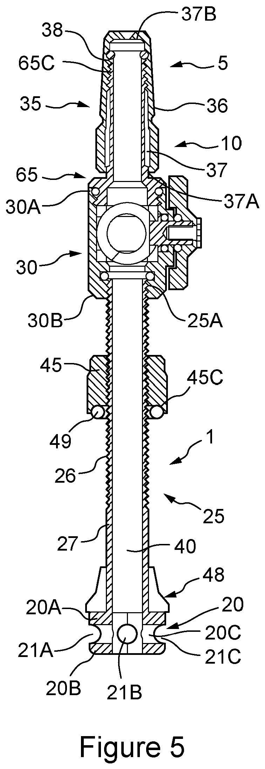

Locking nut 45 is screwed onto screw thread 26 (see Figures 1 and 3-5), and is for assisting in attaching the inflation valve 1 to a wheel rim (not shown). As shown in Figure 2, locking nut 45 comprises internal through hole 46 on which is formed screw thread 46A. Screw thread 46A is shaped to mate with screw thread 26 of valve stem 25. Locking nut 45 also has grooved or knurled section 47 formed on its external surface to assist the user in screwing it onto screw thread 26. In addition, locking nut 45 is provided with annular recess 45A at lower end 45B (i.e. the end closest to valve based 20 during use, see Figure 5). Annular recess 45C is shaped to accept O-ring 49. Also fitted onto valve stem 25 via its internal through hole 48A is gasket 48. Gasket 48 comprises upper tapered section 45B and lower annular section 48C (see Figure 2). In use (as shown in Figures 1 and 3-5), lower annular section 48C seats against upper annular plate 20A of valve base 20

In some embodiments, the valve head 10, valve stem 25 and valve base 20 can be formed as a single unit. Alternatively, as shown in Figure 2, the valve stem 25 and valve base 20 can be formed as one part, and the valve head 10 as a separate part, the two parts being fitted together prior to use to form the inflation valve 1.

Valve head 10 comprises ball valve 30. At its first end 30A, ball valve 30 is connected to valve upper 65 (also part of valve head 10, shown in Figures 2 and 5, see below for further description of this component) which is fitted with valve cap 35. At its second end 30B, ball valve 30 is screwed onto the screw thread 26 of valve stem 25.

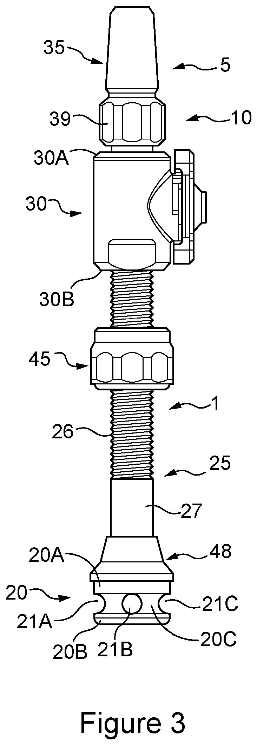

Valve base 20 has a larger diameter than valve stem 25. In the embodiment shown in the Figures, valve base 20 has a circular cross-section. However, other cross-sectional shapes can be utilised. Valve base 20 comprises upper 20A and lower 20B annular plates which are separated by recess 20C. Within recess 20C are formed four equally spaced circular channels (examples illustrated as 21A, 21B, 21C in Figures 3-5).

As shown in Figure 5, there is a conduit 40 (internal valve stem) extending through valve stem 25. Fluid connection is therefore provided through valve stem 25 from first end 25A that connects to valve head 10, through the conduit 40 to the channels 21A, 21B, 21C of valve base 20.

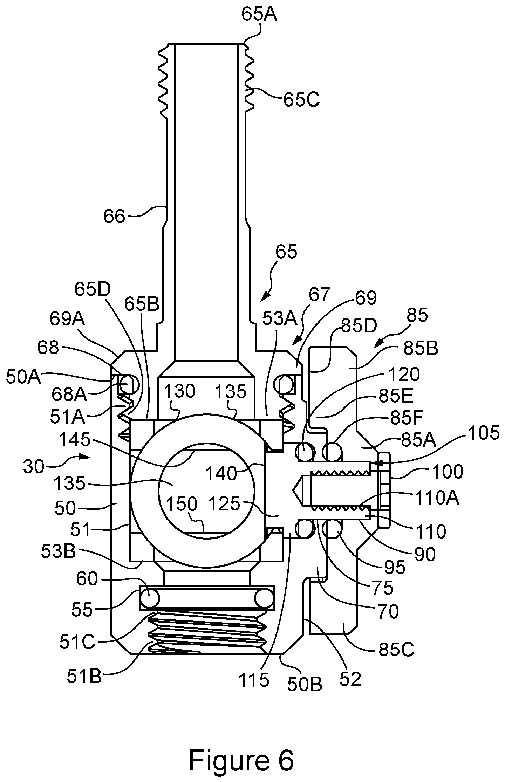

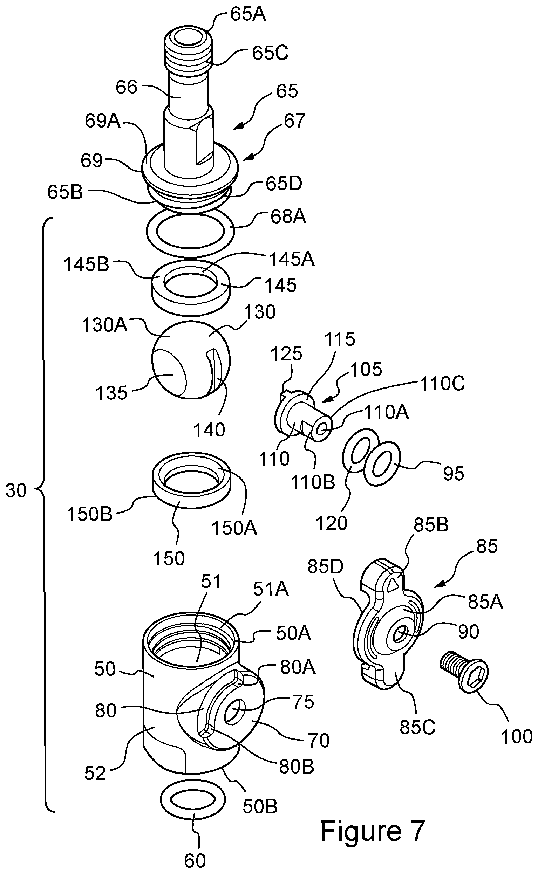

The component parts of ball valve 30 and the valve upper 65 will now be described in more detail with reference to the cross-sectional view of the ball valve 30 in Figure 6, and the exploded view of the ball valve 30 and valve upper 65 in Figure 7. Not all parts of the ball valve 30 and valve upper 65 are visible in both Figures 6 and 7.

As shown in Figures 6 and 7, ball valve 30 comprises central housing 50 which is substantially in the form of a hollow cylinder with inner surface 51. Extending from first end 50A of central housing 50, first inner surface 51 is provided with first screw thread 51A which extends approximately a quarter of the way along inner surface 51 from first end 50A. At a second end 50B of central housing 50, first inner surface 51 is provided with second screw thread 51B (not visible in Figure 7) which extends approximately a quarter of the way along inner surface 51 from second end 50B. Second screw thread 51B has a narrower bore size than first screw thread 51A.

Second screw thread 51B is shaped to mate with screw thread 26 formed on the outer surface 27 of valve stem 25. Second screw thread 51B is also provided with annular recess 55 at its inner end 51C (not visible in Figure 7). Annular recess 55 is slightly larger in diameter that second screw thread 51B, and is shaped to accept an O-ring 60. The O-ring 60 assists in providing a substantially air-tight seal between ball valve 30 and valve stem 25.

First screw thread 51A is shaped to mate with a corresponding screw thread formed on valve upper 65. Valve upper 65 is substantially in the form of a hollow cylinder. Extending from its first end 65A, valve upper 65 is provided with first screw thread 65C on its outer surface 66. First screw thread 65C is shaped to mate with a corresponding screw thread inside valve cap 35 (see Figure 5). As is known in the art, valve cap 35 comprises an outer surface 36 and an inner cylindrical recess 37 (see Figure 5). Inner cylindrical recess 37 comprises an open end 37A and a closed end 37B. A screw thread 38 is provided within cylindrical recess 37, adjacent to closed end 37B. Thus, in use, valve cap 35 is placed over valve upper 65 and screw thread 38 of the valve cap 35 is screwed onto first screw thread 65C of valve upper 65. Valve cap 35 may be provided with a grooved or knurled section 39 (see Figures 1-4) on its outer surface 36 in order to assist the user in screwing it on to valve upper 65.

At a second end 65B, valve upper 65 is provided with enlarged diameter section 67. Extending from second end 65B, enlarged diameter section 67 comprises second screw thread 65D, which is the one shaped to mate with first screw thread 51A of central housing 50. Extending further from second end 65B, enlarged diameter section 67 comprises a recess 68 which is shaped to accept an O-ring 68A. Finally, furthest from second end 65B, enlarged diameter section 67 is provided with annular lip 69 which is shaped to seat on first end 50A of central housing 50. Annular lip 69 is provided with chamfer 69A on its outer surface. In this way, a substantially air-tight seal can be provided between ball valve 30 and valve upper 65.

Central housing 50 of ball valve 30 has circular protrusion 70 formed on its outer surface 52. Circular protrusion 70 comprises a central through-hole 75 which communicates with the interior of central housing 50. Circular protrusion 70 also comprises annular quarter turn cut-out section 80 (see Figure 7).

Valve switch 85 is mounted on circular protrusion 70. Valve switch 85 comprises central circular section 85A, and oppositely extending arms 85B, 85C. Central circular section 85A is formed with central through-hole 90 which aligns with the central through-hole 75 of circular protrusion 70. The inner face 85D of valve switch 85 (i.e. that facing the circular protrusion in use) is provided with an annular depression 85F which is shaped to accept O-ring 95. Inner face 85D is also provided with an inwardly extending notch 85E which engages annular quarter turn cut-out section 80 of circular protrusion 70. Screw 100 is inserted into central through-hole 90 of valve switch 85, and central through-hole 75 of central housing 50, in order to assist in securing the valve switch 85 to the central housing 50.

Inserted into the two central through-holes 75, 90, from the interior of central housing 50, is valve key 105. Valve key 105 comprises a protrusion 110 formed with a screw-threaded recess 110A which is shaped to accept screw 100. The protrusion 110 is the part of valve key 105 that is inserted into the two central through-holes 75, 90. At the end of the protrusion 110 closest to screw-threaded recess 110A there is provided opposing straight edges 110B, 110C (see Figure 7) which are shaped to engage a correspondingly shaped section of central through-hole 90 of valve switch 85. At the end of the protrusion 110 furthest from screw-threaded recess 110A there is provided annular seat 115 which abuts the inner surface 51 of central housing 50. A further O-ring 120 is fitted onto protrusion 110 such that it sits between annular seat 115 and inner surface 51 of central housing 50. On an opposite face of annular seat 115 to protrusion 110 there is provided keying protrusion 125.

Ball 130 is positioned centrally within central housing 50. Ball 130 is in the form of a sphere provided with a central cylindrical through-hole 135. On an external surface 130A of the ball, approximately at the equator of the sphere, there is provided keying slot 140 which is shaped to accept keying protrusion 125 of valve key 105. Ball 130 is fitted within upper 145 and lower 150 seating rings. Both seating rings 145, 150 are provided with a chamfered inner surface 145A, 150A (see Figure 7) that, when the ball valve 30 is assembled, seat against the ball 130 and thereby allow it to rotate within central housing 50. Seating rings 145, 150 also comprise outer surfaces 145B, 150B (see Figure 7), opposite to chamfered inner surfaces 145A, 150A, that seat against annular ledges 53A, 53B (see Figure 6) within central housing 50. In this way, ball 130 is retained within central housing 50 of ball valve 30.

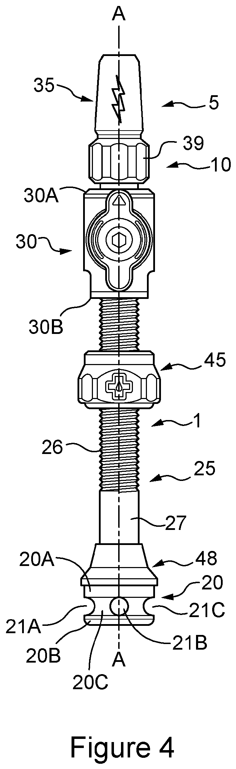

In use, the ball valve 30 can be actuated from a fully closed position, through a range of increasingly partially open positions to a fully open position. In Figures 1-7, the ball valve 30 is shown in the fully closed position in which it substantially prevents the flow of air through inflation valve 1. That is, the arms 85B, 85C of valve switch 85 are vertically aligned with the major axis A-A (see Figure 4) of the inflation valve 1. The inwardly extending notch 85E of valve switch 85 abuts closed end surface 80A of annular quarter turn cut-out section 80. The ball 130 of ball valve 30 is arranged in this fully closed position such that the central cylindrical through-hole 135 is aligned substantially horizontally and thus substantially perpendicular to major axis A-A of inflation valve 1. In this position, the ball 130 blocks the flow of air through inflation valve 1.

In order to open the inflation valve 1, the valve switch 85 is rotated anticlockwise. The opposing straight edges 110B, 110C of protrusion 110 of valve key 105 are thus engaged by the correspondingly shaped section of central through-hole 90 of valve switch 85. Keying protrusion 125 of valve key 105 thus engages keying slot 140 of ball 130, causing the ball 130 to rotate. In this way, central cylindrical through-hole 135 is progressively moved from its fully closed position to a fully open position in which central cylindrical through-hole 135 is aligned substantially vertically, and thus substantially parallel and in line with major axis A-A of inflation valve 1. Thus, as the ball valve 30 is move from the fully closed position to the fully open position, it progressively allows an increased flow of air through inflation valve 1. When the ball valve 30 is in its fully open position, arms 85B, 85C of valve switch 85 are horizontally aligned and thus substantially perpendicular to major axis A-A of inflation valve 1. The inwardly extending notch 85E of valve switch 85 thus abuts closed end surface 80B of annular quarter turn cut-out section 80. In this way, air or sealant (for example, from an inflation device) can flow from first end 65A of valve upper 65, through valve upper 65, through ball valve 30, through conduit 40 of valve stem 25, and thus exit valve base 20 through the channels (e.g. 21A, 21B, 21C) in valve base 20 and into the interior of the tyre (not shown).

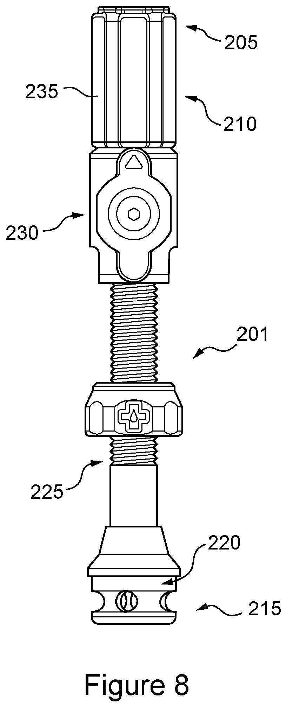

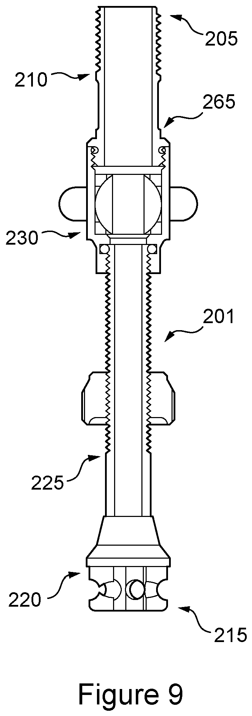

Figures 8 and 9 show an inflation valve 201 according to a second embodiment of the invention. For ease of reference, not all component parts are labelled. The valve 201 comprises a first end 205 at which is formed valve head 210, and a second end 215 at which is formed valve base 220. Valve head 210 and valve base 220 are connected by valve stem 225. Valve head 210 comprises ball valve 230, valve upper 265 (only visible in Figure 9) and valve cap 235 (not present in Figure 9).

The valve base 220, valve stem 225 and ball valve 230 of the second embodiment are identical to those of the inflation valve 1 of the first embodiment. Inflation valve 201 of the second embodiment differs from that of the first embodiment in that the valve head 210, in particular the valve upper 265, has a larger, Schrader diameter (i.e. an outer diameter of ~8 mm). This allows the user to inflate the tubeless tyre (not shown) by connecting the valve upper 265 of inflation valve 201 to a Schrader pump.

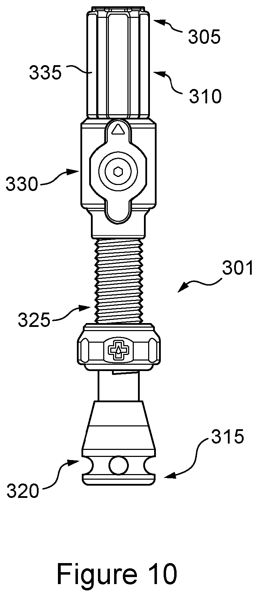

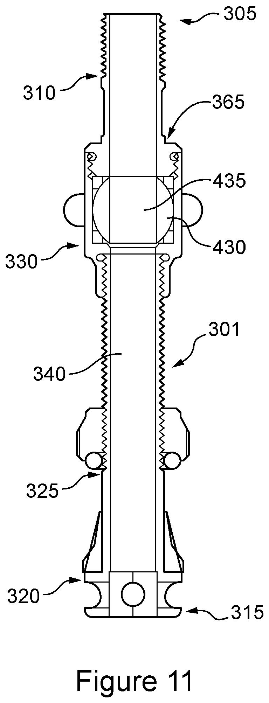

Figures 10 and 11 show an inflation valve 301 according to a third embodiment of the invention. For ease of reference, not all component parts are labelled. The valve 301 comprises a first end 305 at which is formed valve head 310, and a second end 315 at which is formed valve base 320. Valve head 310 and valve base 320 are connected by valve stem 325. Valve head 310 comprises ball valve 330, valve upper 365 (only visible in Figure 11) and valve cap 335 (not present in Figure 11).

As shown in Figure 11, there is a conduit 340 (internal valve stem) extending through valve stem 325. Also as shown in Figure 11, ball valve 330 comprises ball 430. Ball 430 is in the form of a sphere provided with a central cylindrical through-hole 435.

Inflation valve 301 of the third embodiment differs from that of the first embodiment in that valve head 310 (in particular the valve upper 365), valve stem 325 and ball valve 330 have a larger, Schrader diameter (i.e. an outer diameter of ~8 mm). This means that the conduit 340 within valve stem 325, and the central cylindrical through-hole 435 of ball 430, also have a larger diameter than the corresponding parts of the inflation valve 1 of the first embodiment. This allows the user to inflate the tubeless tyre (not shown) by connecting the valve upper 365 of inflation valve 301 to a Schrader pump, whilst also providing a larger diameter channel through the inflation valve 301.

## Claims

1. An inflation valve (1, 201, 301) for use with a tubeless tyre, the inflation valve (1, 201, 301) comprising a ball valve (30, 230, 330), the ball valve (30, 230, 330) comprising a housing (50) within which is provided a ball (130, 430), **characterised in that** the ball (130, 430) is formed with a through-hole (135, 435), the ball (130, 430) being rotatable between an open position in which air and/or sealant is allowed to flow through the through-hole (135, 435), and a closed position in which air and/or sealant is substantially prevented from flowing through the through-hole (135, 435).

2. An inflation valve (1, 201, 301) as claimed in claim 1, the inflation valve (1, 201, 301) having first (5, 205, 305) and second (15, 215, 315) ends, the first end (5, 205, 305) comprising a valve head (10, 210, 310) comprising the ball valve (30, 230, 330).

3. An inflation valve (1, 201, 301) as claimed in claim 2, the second end (15, 215, 315) comprising a valve base (20, 220, 330).

4. An inflation valve (1, 201, 301) as claimed in claim 3, wherein the valve head (10, 210, 310) and the valve base (20, 220, 330) are connected by a valve stem (25, 225, 325).

5. An inflation valve (1, 201, 301) as claimed in claim 4, wherein the valve stem (25, 225, 325) has a substantially circular cross-section.

6. An inflation valve (1, 201, 301) as claimed in claim 5, wherein the valve stem (25, 225, 325) has an external surface (27) on which is formed a screw thread (26).

7. An inflation valve (1, 201, 301) as claimed in claim 6, wherein a locking nut (45) is provided on the screw thread (26).

8. An inflation valve (1, 201, 301) as claimed in any one of claims 4-7, wherein the valve base (20, 220, 330) has a diameter which is larger than that of the valve stem (25, 225, 325).

9. An inflation valve (1, 201, 301) as claimed in claim 8, wherein the valve base (20, 220, 330) has a substantially circular or hexagonal cross-section.

10. An inflation valve (1, 201, 301) as claimed in claim 9, wherein when the valve base (20, 220, 330) has a substantially circular cross-section, it comprises one or more apertures (21A, 21B, 21C) which connect to a conduit (40, 340) in order to provide fluid communication between the first (5, 205, 305) and second (15, 215, 315) ends of the inflation valve (1, 201, 301).

11. An inflation valve (1, 201, 301) as claimed in any one of claims 2-10, wherein the valve head (10, 210, 310) comprises at its first end a valve upper (65, 265, 365) which is adapted for connection to an inflation device.

## Patentansprüche

1. Ein Aufpumpventil (1, 201, 301) zur Verwendung mit einem schlauchlosen Reifen, wobei das Aufpumpventil (1, 201, 301) ein Kugelventil (30, 230, 330) beinhaltet, wobei das Kugelventil (30, 230, 330) ein Gehäuse (50) beinhaltet, in dem eine Kugel (130, 430) bereitgestellt ist, **dadurch gekennzeichnet, dass** die Kugel (130, 430) mit einem Durchgangsloch (135, 435) ausgebildet ist, wobei die Kugel (130, 430) zwischen einer offenen Stellung, in der ermöglicht wird, dass Luft und/oder Dichtungsmittel durch das Durchgangsloch (135, 435) strömt, und einer geschlossenen Stellung, in der Luft und/oder Dichtungsmittel im Wesentlichen daran gehindert wird, durch das Durchgangsloch (135, 435) zu strömen, drehbar ist.

2. Aufpumpventil (1, 201, 301) gemäß Anspruch 1, wobei das Aufpumpventil (1, 201, 301) ein erstes (5, 205, 305) und ein zweites (15, 215, 315) Ende aufweist, wobei das erste Ende (5, 205, 305) einen Ventilkopf (10, 210, 310) beinhaltet, der das Kugelventil (30, 230, 330) beinhaltet.

3. Aufpumpventil (1, 201, 301) gemäß Anspruch 2, wobei das zweite Ende (15, 215, 315) eine Ventilbasis (20, 220, 330) beinhaltet.

4. Aufpumpventil (1, 201, 301) gemäß Anspruch 3, wobei der Ventilkopf (10, 210, 310) und die Ventilbasis (20, 220, 330) durch einen Ventilschaft (25, 225, 325) verbunden sind.

5. Aufpumpventil (1, 201, 301) gemäß Anspruch 4, wobei der Ventilschaft (25, 225, 325) einen im Wesentlichen kreisförmigen Querschnitt aufweist.

6. Aufpumpventil (1, 201, 301) gemäß Anspruch 5, wobei der Ventilschaft (25, 225, 325) eine Außenfläche (27) aufweist, auf der ein Schraubengewinde (26) ausgebildet ist.

7. Aufpumpventil (1, 201, 301) gemäß Anspruch 6, wobei eine Sicherungsmutter (45) auf dem Schraubengewinde (26) bereitgestellt ist.

8. Aufpumpventil (1, 201, 301) gemäß einem der Ansprüche 4-7, wobei die Ventilbasis (20, 220, 330) einen Durchmesser aufweist, der größer als der des Ventilschafts (25, 225, 325) ist.

9. Aufpumpventil (1, 201, 301) gemäß Anspruch 8, wobei die Ventilbasis (20, 220, 330) einen im Wesentlichen kreisförmigen oder sechseckigen Querschnitt aufweist.

10. Aufpumpventil (1, 201, 301) gemäß Anspruch 9, wobei, wenn die Ventilbasis (20, 220, 330) einen im Wesentlichen kreisförmigen Querschnitt aufweist, sie eine oder mehrere Öffnungen (21A, 21B, 21C) beinhaltet, die mit einer Leitung (40, 340) verbunden sind, um eine Fluidkommunikation zwischen dem ersten (5, 205, 305) und dem zweiten (15, 215, 315) Ende des Aufpumpventils (1, 201, 301) bereitzustellen.

11. Aufpumpventil (1, 201, 301) gemäß einem der Ansprüche 2-10, wobei der Ventilkopf (10, 210, 310) an seinem ersten Ende ein Ventiloberteil (65, 265, 365) beinhaltet, das zur Verbindung mit einer Aufpumpvorrichtung angepasst ist.

## Revendications

1. Une valve de gonflage (1, 201, 301) pour une utilisation avec un pneu sans chambre, la valve de gonflage (1, 201, 301) comprenant un robinet à boisseau sphérique (30, 230, 330), le robinet à boisseau sphérique (30, 230, 330) comprenant un logement (50) à l'intérieur duquel est prévue une bille (130, 430), **caractérisée en ce que** la bille (130, 430) est formée avec un trou traversant (135, 435), la bille (130, 430) étant mobile en rotation entre une position ouverte dans laquelle de l'air et/ou un produit d'étanchéité peut s'écouler à travers le trou traversant (135, 435), et une position fermée dans laquelle de l'air et/ou un produit d'étanchéité est substantiellement empêché de s'écouler à travers le trou traversant (135, 435).

2. Une valve de gonflage (1, 201, 301) telle que revendiquée dans la revendication 1, la valve de gonflage (1, 201, 301) présentant des première (5, 205, 305) et
deuxième (15, 215, 315) extrémités, la première extrémité (5, 205, 305) comprenant une tête de valve (10, 210, 310) comprenant le robinet à boisseau sphérique (30, 230, 330).

3. Une valve de gonflage (1, 201, 301) telle que revendiquée dans la revendication 2, la deuxième extrémité (15, 215, 315) comprenant un pied de valve (20, 220, 330).

4. Une valve de gonflage (1, 201, 301) telle que revendiquée dans la revendication 3, où la tête de valve (10, 210, 310) et le pied de valve (20, 220, 330) sont raccordés par une tige de valve (25, 225, 325).

5. Une valve de gonflage (1, 201, 301) telle que revendiquée dans la revendication 4, où la tige de valve (25, 225, 325) présente une section transversale substantiellement circulaire.

6. Une valve de gonflage (1, 201, 301) telle que revendiquée dans la revendication 5, où la tige de valve (25, 225, 325) présente une surface externe (27) sur laquelle est formé un filetage (26).

7. Une valve de gonflage (1, 201, 301) telle que revendiquée dans la revendication 6, où un écrou de blocage (45) est prévu sur le filetage (26).

8. Une valve de gonflage (1, 201, 301) telle que revendiquée dans l'une quelconque des revendications 4 à 7, où le pied de valve (20, 220, 330) présente un diamètre qui est plus grand que celui de la tige de valve (25, 225, 325).

9. Une valve de gonflage (1, 201, 301) telle que revendiquée dans la revendication 8, où le pied de valve (20, 220, 330) présente une section transversale substantiellement circulaire ou hexagonale.

10. Une valve de gonflage (1, 201, 301) telle que revendiquée dans la revendication 9, où lorsque le pied de valve (20, 220, 330) présente une section transversale substantiellement circulaire, il comprend une ou plusieurs ouvertures (21A, 21B, 21C) qui se raccordent à un conduit (40, 340) afin d'assurer une communication fluidique entre les première (5, 205, 305) et deuxième (15, 215, 315) extrémités de la valve de gonflage (1, 201, 301).

11. Une valve de gonflage (1, 201, 301) telle que revendiquée dans l'une quelconque des revendications 2 à 10, où la tête de valve (10, 210, 310) comprend au niveau de sa première extrémité une partie supérieure de valve (65, 265, 365) qui est adaptée pour un raccordement à un dispositif de gonflage.
